# EUROPEAN PATENT SPECIFICATION

(11) **EP 1 534 418 B1**
(45) Date of publication and mention of the grant of the patent: **09.08.2006**
(21) Application number: 03732778.0
(22) Date of filing: 09.06.2003
(51) Int. Cl.: B01J 2/30

(54) **DENSIFYING OF A BULK PARTICULATE MATERIAL**
VERDICHTEN VON SCHÜTTGUT
DENSIFICATION D'UN MATERIAU PARTICULAIRE EN VRAC

(30) Priority: 10.06.2002 ZA 200204641
(43) Date of publication of application: 01.06.2005
(73) Proprietor: Russel-Smith, Kevan Vaughan, 2161 Johannesburg (ZA)
(72) Inventor: Russel-Smith, Kevan Vaughan, 2161 Johannesburg (ZA)
(74) Representative: Holt, Daniel Richard
(86) International application number: PCT/IB2003/002170
(87) International publication number: WO 2003/103824

(56) References cited:
- WO-A1-00/00418
- GB-A- 1 090 765
- US-A- 809 354
- US-A- 3 356 520

## Description

THIS INVENTION relates to densifying of a bulk particulate material. In particular, it relates to a method for densifying a bulk particulate material.

The Applicant is aware of US 3356520 and GB 1090765 which describe a method of densifying carbon black. The method uses a densifying oil which is sprayed as a fine mist onto particles of loose carbon black in a bulky mass of the particles in a confined zone with the mass of carbon black simultaneously being tumultuously agitated. Relatively high concentrations of oil are required to increase the bulk density to a significant extent.

According to one aspect of the invention, there is provided a method of densifying a bulk particulate material to provide a densified flowable bulk particulate material, the method including mechanically agitating the bulk particulate material in the presence of a densification agent thereby to provide a flowable bulk particulate material of increased bulk density.

The densification agent is thus a liquid. It is however a feature of the invention that it is not necessary to remove the densification agent after having densified the bulk particulate material in order to obtain a flowable bulk particulate material. The densification agent is thus present or used in quantities small enough to ensure that the densified bulk particulate material remains flowable and does not form a slurry. The quantity of densification agent remaining in the densified flowable bulk particulate material is also so small that the mere presence of the densification agent in the densified flowable bulk particulate material does not materially alter the bulk density of the combined particulate material and the remaining densification agent. This bulk density is only changed to a significant extent by severely agitating the combined particulate material and the densification agent, without any significant agglomeration of the particulate material, or at least to a much lower degree of agglomeration than is reached with the prior art pneumatic densification processes of which the Applicant is aware.

The densification agent is thus an aqueous liquid, e.g. water or demineralised water.

The bulk particulate material, prior to densifying thereof, may include water in a mass concentration falling in a range with a lower limit of about 0.5 %. The lower limit may however be as low as about 0.45 %, or even as low as about 0.4 %. An upper limit of the range may be as high as about 10 %, or even higher at about 15 %, or even as high as about 20 %.

It is however to be appreciated that the bulk particulate material being densified may affect the effective range within which an aqueous densification agent can be used. The aforementioned ranges are however suitable for the densification of microsilica, such as silica fume.

The bulk particulate material may be a hygroscopic material. The bulk particulate material may be microsilica, e.g. fumed silica, precipitated silica, colloidal silica or silica gel.

Instead, the bulk particulate material may be selected from the group consisting of carbon black, fly ash, kaolin, and meta kaolin. Also, the bulk particulate material may be selected from the group consisting of Mn₂O₃, Mn₃O₄, V₂O₅, cement and slag.

When the bulk particulate material is particulate silica, the particulate silica may have a particle size of the less than 0.5 µm, typically less than 0.2 µm. Indeed, it is expected that the invention will find particular, though not exclusive application in densifying so-called silica fume.

The method may include adding the densification agent to the bulk particulate material, prior to or during mechanical agitation of the bulk particulate material.

Mechanically agitating the bulk particulate material in the presence of the densification agent may include at least partially confining the bulk particulate material and rotating a rotatable member submerged under the bulk particulate material about an axis of rotation to cause severe agitation of the material. Typically, when the densification agent is present, the severe agitation of the bulk particulate material does not cause significant fluidisation of the bulk particulate material, and a free head space exists above the mechanically agitated material in the vessel.

Mechanically agitating the bulk particulate material in the presence of the densification agent may include severely agitating the bulk particulate material with a rotatable member submerged in the bulk particulate material in a vessel and rotating about an axis of rotation which is upwardly extending, and inhibiting displacement of material downwardly past the rotating member during rotation of the rotatable member whilst allowing free movement of materials in the vessel above the rotating member.

The bulk particulate material may be confined in a vessel having a closed bottom, the rotatable member being located immediately above the bottom of the vessel.

The rotatable member may define at least one material contacting surface facing substantially tangentially in the direction of rotation thereby to cause movement of material particles essentially towards or away from the axis of rotation at least on initial contact of the material particles with the material contacting surface. A radially outer end of the material contacting surface may lead a radially inner end thereof.

The material contacting surface is thus typically slanted, i.e. non-perpendicular or non-radial to the direction of rotation to cause material particles to move tangentially and/or radially relative to the axis of rotation. One or more radially extending material contacting surfaces, or surfaces of variable orientation, e.g. defined by flexible members, are however not excluded from the scope of the invention.

In one embodiment of the invention, the rotatable memberdefines a plurality of circumferentially spaced material contacting surfaces each facing substantially tangentially in the direction of rotation with a radially outer end of the surface leading a radially inner end thereof. Each material contacting surface may be defined by a slanted vane.

The rotatable member may thus include a plurality of circumferentially spaced vanes projecting from an upper surface of a disc-shaped body, the disc-shaped body and the vessel which confines the bulk particulate material cooperating to inhibit axial displacement of the agitated bulk particulate material downwardly past the rotating member during rotation of the rotatable member. Instead, the vanes may project tangentially or radially outwardly from a periphery of the disc-shaped body or from a hub.

Each vane may define a planar material contacting surface extending upwardly parallel to the axis of rotation of the rotatable member.

The rotatable member may be rotated such that a point on an extreme radially outer periphery of the rotatable member, submerged in the bulk particulate material, travels at a speed of between about 5 m/s and about 80 m/s, typically between about 21 m/s and about 23 m/s.

Confining the bulk particulate material may include feeding the bulk particulate material into a vessel. Thus, an entire body of bulk particulate material may be densified inside the vessel to provide a uniform body of particulate material having a uniform bulk density inside the vessel. Typically, the vessel has a wall defining a circular cylindrical interior surface or a cone-shaped interior surface. The vessel may have a central, longitudinal axis which is coaxial with the axis of rotation of the rotatable member.

The method may include vibrating the vessel to inhibit agglomeration or build-up or caking of the particulate material against interior surfaces of the vessel.

The method may include discharging the flowable densified bulk particulate material from the vessel. It is to be appreciated that the method can be conducted on a continuous basis or on a batch basis, discharging of the densified bulk particulate material from the vessel and feeding of bulk particulate material into the vessel thus occurring batch-wise, or on a controlled basis. Thus, the bulk particulate material may be fed on a continuous basis into the vessel, and the densified bulk particulate material may be discharged on a continuous basis from the vessel, the entire body of bulk particulate material inside the vessel having, at steady state conditions, a substantially higher bulk density than bulk particulate material feed.

The method may include measuring or determining the bulk density of the densified bulk particulate material prior to discharging it from the vessel. Instead, the method may include measuring or determining the bulk density of the densified bulk particulate material after it has been discharged from the vessel.

The method may include controlling the density of the densified bulk particulate material. The controlling of the density of the densified bulk particulate material may be effected by a method selected from the group consisting of manipulating the residence time of the bulk particulate material in the vessel, manipulating the angular speed of rotation of the rotatable member, manipulating the level of the bulk particulate material in the vessel, controlling the concentration of the densification agent present with the bulk particulate material, and two or more of these methods. The controlling of the density of the densified bulk particulate material is however not necessarily limited to these methods.

The axis of rotation of the rotatable member may be substantially vertical. In another embodiment of the invention, the coaxial axis of rotation and longitudinal axis of the vessel are at an angle of about 60 ° to the horizontal.

The rotatable member may be rotated at an angular speed of between 100 rpm and 3500 rpm. Preferably, the rotatable member is rotated at an angular speed of between 500 rpm and 1000 rpm. Typically, the rotatable member is rotated at an angular speed of between 700 rpm and 800 rpm, e.g. about 732 rpm.

The bulk particulate material may have a mean particle size of less than 1 mm. Typically, the bulk particulate material has a mean particle size of less than 0.5 mm, even less than 1 µm, e.g. about 0.15 µm.

The method may include extracting dust from the vessel.

The ratio of the bulk density of the particulate material prior to densifying thereof, to the bulk density of the flowable densified particulate material may be at least 2 : 3. Preferably, the ratio of the bulk density of the particulate material prior to densifying thereof, to the bulk density of the flowable densified particulate material is at least 1 : 5, depending on the bulk density of the particulate material prior to densifying and the particulate material being densified. The ratio can be as large as 1 : 10, or even larger, e.g. 1 : 12 depending on the bulk density of the particulate material prior to densifying and the particulate material being densified.

The method may include allowing the concentration of the densification agent to reduce during the mechanical agitation of the bulk particulate material.

Thus, typically, the bulk particulate material is allowed to heat up during the mechanical agitation thereof. The concentration of the densification agent may thus be reduced as a result of vaporization of at least a portion of the densification agent.

The bulk particulate material may include water in, or water may be added to the bulk particulate material to, a concentration of more than 4 % by mass, with the densified bulk particulate material including less than 3 % water by mass. Typically, especially when the bulk particulate material is microsilica, the bulk particulate material includes water in, or water is being added to the bulk particulate material to, a concentration of between 4 % and 8 % by mass, preferably between 6 % and 8 % by mass, with the densified bulk particulate material including less than 1.5 %, preferably less than 1 %, water by mass.

An apparatus suitable for densifying a bulk particulate material includes
a vessel for at least partially confining a body of the bulk particulate material;
a rotatable member which is arranged such that in use it is submerged in the body of bulk particulate material mechanically severely to agitate the bulk particulate material;
a densification agent inlet leading into the vessel; and
drive means connected to the rotatable member and capable of rotating the rotatable member about said axis of rotation when the rotatable member is submerged in the body of bulk particulate material.

The apparatus may include a densification agent outlet from the vessel to remove vaporised densification agent. Instead, the densification agent inlet may also function as a densification agent outlet.

Another apparatus suitable for densifying a bulk particulate material includes
a vessel for at least partially confining a body of the bulk particulate material;
a rotatable member which is arranged such that in use it is submerged in the body of bulk particulate material mechanically severely to agitate the bulk particulate material;
a densification agent outlet from the vessel to remove a vaporised densification agent from the vessel; and
drive means connected to the rotatable member and capable of rotating the rotatable member about said axis of rotation when the rotatable member is submerged in the body of bulk particulate material.

The rotatable member may be as hereinbefore described.

When the rotatable member includes a plurality of vanes, a radially inner end portion of at least some of the vanes may be truncated so that the radially inner end of the vane forms an angle of between 15 ° and 60 ° with the axis of rotation in the plane of the vane. Preferably, the angle is between 20 ° and 50 °, e.g. about 30 °.

The vessel may have an outlet for densified bulk particulate material at a low elevation, and an inlet for bulk particulate material at a higher elevation than the outlet. Preferably, the rotatable member is located at the elevation of the outlet of the vessel.

The drive means may be capable of rotating the rotatable member at an angular speed of between 100 rpm and 3500 rpm when the rotatable member is submerged in the body of particulate material. Typically, the drive means is capable of rotating the rotatable member at an angular speed of between 500 rpm and 1000 rpm when the rotatable member is submerged in the body of particulate material, e.g. at about 700 rpm to 800 rpm.

The vessel may have a wall defining a circular cylindrical interior surface or a conical interior surface, and a central, longitudinal axis which may be coaxial with the axis of rotation of the rotatable member. The ratio of the diameter of a circle described by the rotatable member when it rotates, to the diameter of the vessel may be between 0.25 : 1 and 0.99 : 1. Preferably, the ratio is at least between 0.5 : 1 and 0.99 : 1. Typically, the ratio of the diameter of the circle described by the rotatable member when it rotates, to the diameter of the vessel is at least between 0.9 : 1 and 0.99 : 1, e.g. about 0.95 : 1.

The vessel may have a volume of between 0.1 m³ and 200 m³. Typically, the vessel has a volume of between 0.1 m³ and 0.5 m³.

The axis of rotation of the rotatable member may be substantially vertical.

The apparatus may include conveying means and bagging means, the conveying means being arranged to convey densified bulk particulate material from the vessel to the bagging means for bagging the densified bulk particulate material.

The apparatus may include vibration means for vibrating the vessel to inhibit agglomeration or caking or build-up of the particulate material against interior surfaces of the vessel.

The apparatus may include dust extraction means for extracting dust from the vessel.

The rotatable member and interior surfaces of the vessel may be coated with a material which inhibits caking or agglomeration or build-up of the bulk particulate material against or on them.

The apparatus may include density measurement means and control means for controlling the bulk density of the densified bulk particulate material.

The invention will now be described, by way of example, with reference to the accompanying diagrammatic drawings and examples.

In the drawings
Figure 1 shows a sectioned elevational view of one embodiment of densification apparatus for densifying a bulk particulate material;
Figure 2 shows a three-dimensional view of a rotatable member of the densification apparatus of Figure 1;
Figure 3 shows a sectioned elevational view of another embodiment of densification apparatus for densifying a bulk particulate material; and
Figure 4 shows a three-dimensional view of a rotatable member of the densification apparatus of Figure 3.

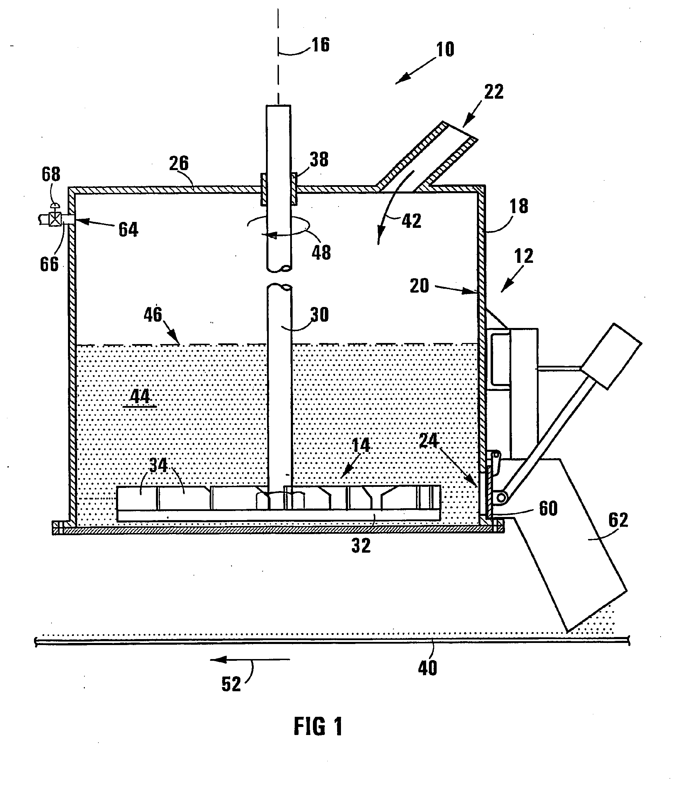

Referring to Figure 1 of the drawings, reference numeral 10 generally indicates one embodiment of densification apparatus in accordance with the invention for densifying a bulk particulate material. The apparatus 10 includes a vessel 12 for containing and confining the bulk particulate material, and a rotatable member 14 which is in use submerged in the bulk particulate material contained in the vessel 12, and which is rotatable about a vertical axis of rotation 16.

The vessel 12 includes a circular cylindrical wall 18 which defines a circular cylindrical interior surface 20 of the vessel 12. Thus, the vessel 12 has a central, longitudinal vertical axis which corresponds or which is coaxial with the axis of rotation 16. In another embodiment of the invention, the axis of the vessel and the axis of rotation may be angularly disposed relative to the horizon, e.g. at an angle of about 60

The vessel 12 includes an inlet 22 for the bulk particulate material, and an outlet 24 for densified bulk particulate material. The inlet 22 is located in a roof 26 of the vessel 12, and the outlet 24 is located in the wall 18 of the vessel 12.

The rotatable member 14 is located at the elevation of the outlet 24. The rotatable member 14 is mechanically attached to a drive shaft 30, which is in turn drivingly connected to an electric motor (not shown). The electric motor is capable of selectively rotating the rotatable member 14 at an angular speed of between 700 rpm and 800 rpm.

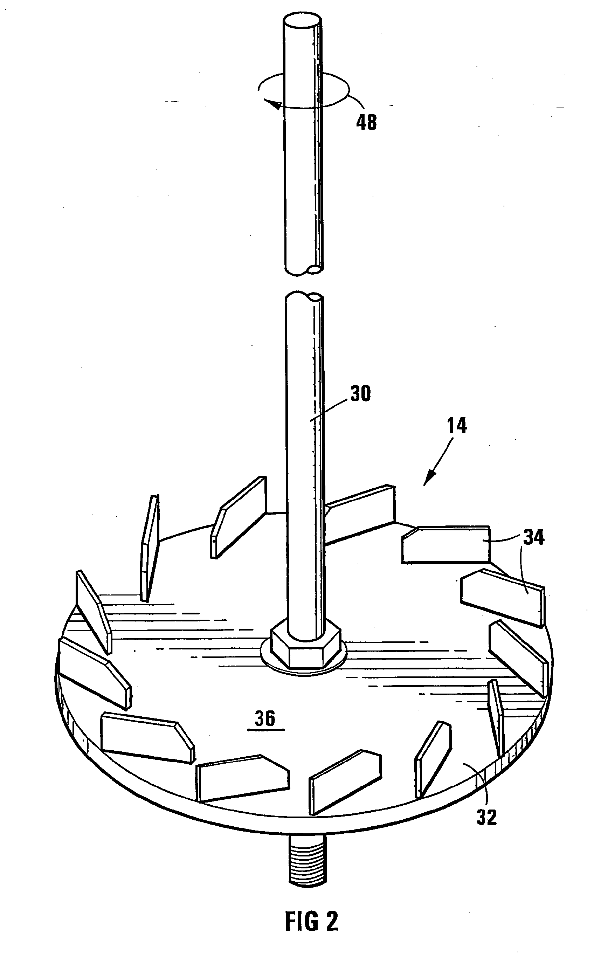

The rotatable member 14 includes a disc-like body 32 from which a plurality of circumferentially spaced planar vanes 34 projects (see Figure 2). The vanes 34 are directed or arranged in use to displace the bulk particulate material contained in the vessel 12 inwardly towards the axis of rotation 16 when the body 32 is rotated slowly. The vanes 34 project from a surface 36 of the disc-like body 32 which is an operative upper surface.

The disc-like body 32, and thus the rotatable member 14, has a diameter of 720 mm. The vessel 12 has an internal diameter of about 800 mm. Thus, a ratio of the diameter of the rotatable member 14 : the diameter of the vessel 12 is 0.9 : 1.

The drive shaft 30 extends through the roof 26 of the vessel 12. A seal 38 is provided between the drive shaft 30 and the roof 26.

A conveyor belt 40 is provided underneath the vessel 12. An automatic, controlled outlet cover 60 is provided to open or close the outlet 24. A chute 62 provides flow communication between the outlet 24 and the conveyor belt 40.

A densification agent inlet 64 is provided in the wall 18, at a relatively high elevation. The inlet 64 is in flow communication with a water feed line 66. A flow controller 68 is provided in the flow line 66.

A dust extraction outlet (not shown) is provided for the vessel 12, and a vibrator (not shown) is mounted against the exterior surface of the wall 18.

In use, the vessel 12 is fed on a controlled and measured basis with bulk particulate material 44, as shown by arrow 42, to maintain a level 46 of the bulk particulate material in the vessel 12 sufficient to cover the rotatable member 14. A free head space thus exists above the level 46, even during agitation. Water is added in a predetermined controlled ratio through the inlet 64 to the bulk particulate material. When the material is silica fume, this ratio is about 6 : 100 on a mass basis.

The submerged rotatable member 14 is rotated at an angular speed of about 732 rpm, in the direction of arrow 48, by means of the electric motor and the drive shaft 30. The vanes 34 severely agitate the bulk particulate material and densify the bulk particulate material. The vibrator is run to inhibit caking of the bulk particulate material against interior surfaces of the vessel 12, and dust which is formed is extracted through the dust extraction outlet, together with water vapour formed as a result of the frictional heating of the particulate material, which can reach temperatures of 70 °C to 80 °C.

The densified bulk particulate material is discharged through the outlet 24 and the chute 62 on to the conveyor belt 40, which moves in the direction of arrow 52. The density of the densified bulk particulate material on the conveyor belt 40 is measured by density measurement and control means (not shown), which increases or decreases the discharge rate of the densified bulk particulate material from the vessel 12 by opening or closing the outlet cover 60, thereby increasing or decreasing the residence time of the bulk particulate material in the vessel 12, in order to densify the bulk particulate material to a desired bulk density. Typically, the densified bulk particulate material includes less than 1 % by mass water.

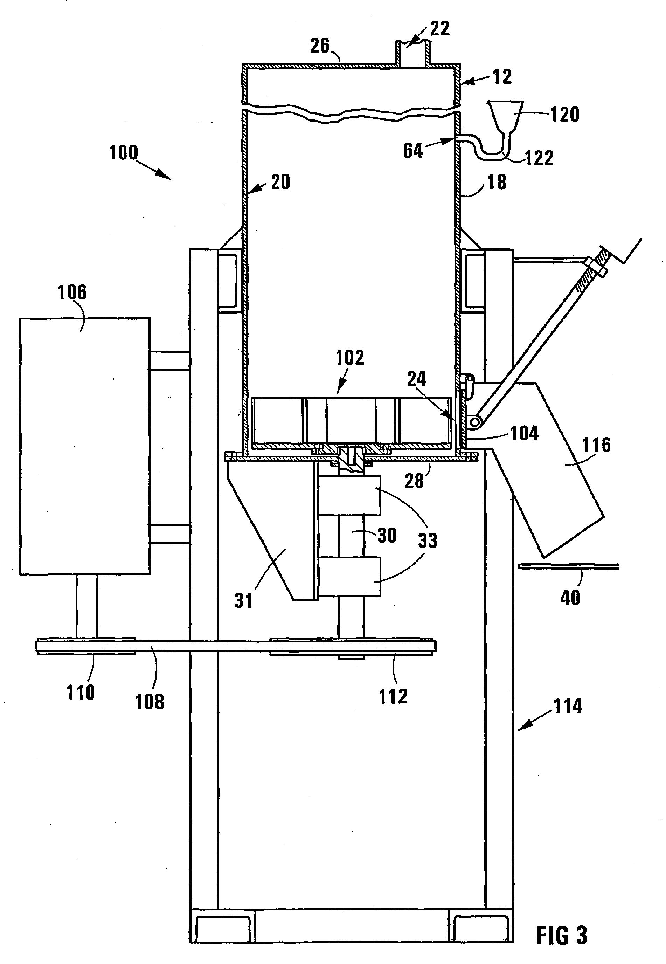

Referring to Figure 3 of the drawings, another embodiment of densification apparatus in accordance with the invention for densifying a bulk particulate material is generally indicated by reference numeral 100. The apparatus 100 is similar to the apparatus 10, and unless otherwise indicated, the same reference numerals used in relation to the apparatus 10, are used to indicate the same or similar parts or features of the apparatus 100.

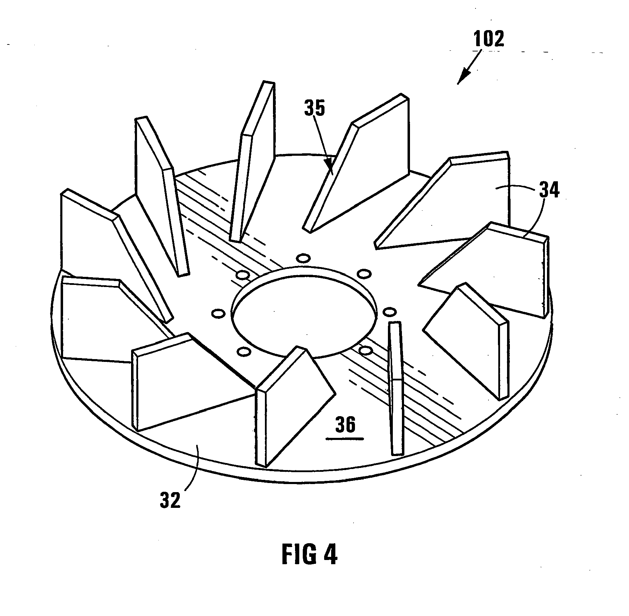

The apparatus 100 includes a rotatable member 102, which is more clearly illustrated in Figure 4 of the drawings. As can be seen in Figure 4, the vanes 34 are vertical and planar, and are substantially tangential to the drive shaft 30 (not shown) in Figure 4, which is operatively connected to the rotatable member 102. An inner end portion of each vane 34 is truncated so that the radially inner end 35 of each vane 34 forms an angle of about 30° with the axis of rotation of the rotatable member 34, in the plane of the vane 34.

The rotatable member 102 is located at the elevation of the outlet 24 of the vessel 12. The outlet 24 is provided in a lower portion of the wall 18 of the vessel 12. A manually operated outlet cover 104 is provided to open or close the outlet 24.

The drive shaft 30 is rotatably mounted to a support member 31 by means of two plummer blocks 33 and is operatively connected to an electric motor 106, by means of a drive belt 108 and two pulleys 110, 112. The arrangement of the motor 106 and the pulleys 110, 112 is such that, in use, the motor 106 is capable of rotating the rotatable member 102 at an average speed of between 700 rpm and 800 rpm.

The vessel 12 and motor 106 are mounted on a support structure 114.

The vessel 12 has an internal diameter of about 576mm, and a height of about 1500 mm. The rotatable member 102 has a diameter of about 550 mm. Thus, the ratio of the diameter of the rotatable member 102 to the diameter of the vessel 12 is about 0.95 : 1.

The densification agent inlet 64 is in flow communication with a funnel 120, via a gooseneck 122.

The apparatus 100 is used in similar fashion to the apparatus 10 to densify bulk particulate material, but works on a batch basis. Thus, a measured weight of bulk particulate material is fed into the vessel 12 through the inlet 22 to provide a level of the bulk particulate material in the vessel 12 sufficient to cover the rotatable member 102. A measured amount of water as densification agent is poured into the funnel 120 and allowed to flow into the vessel 12. The rotatable member 102 is rotated at an angular speed of about 732 rpm by means of the electric motor 106 and drive shaft 30. The vanes 34 severely agitate the bulk particulate material and densify the bulk particulate material. The densified bulk particulate material is discharged on a batch basis through the outlet 24 onto the conveyor belt 40 by means of a chute 116. The conveyor 40 conveys the densified bulk particulate material to a bagging plant (not shown), which bags the densified bulk particulate material. During densification the inlet 22 functions as a moisture outlet to allow vaporised water to escape from the vessel 12.

### EXAMPLE 1

Silica fume, having a bulk density of 100 kg/m³, was densified by means of the apparatus 100 of Figure 3, without adding water as a densification agent to the bulk particulate material inside the vessel 12. The apparatus 100 managed to increase the bulk density of the silica fume to about 450 kg/m³. A small quantity of water, in a ratio of about 3 : 100 on a weight basis, was added to the partially densified silica fume and the rotatable member 102 was again rotated at about 732 rpm for a short period of time. During this period, the bulk density of the silica fume inside the vessel 12 increased from about 450 kg/m³ to about 1200 kg/m³. At the end of this period, the silica fume was still in the form of a flowable powder.

### EXAMPLE 2

The same process as described for Example 1 was used to densify carbon black. Initially, the carbon black had a bulk density of between 40 kg/m³ and 80 kg/m³. After having partially densified the carbon black in the absence of a densification agent, the bulk density of the carbon black increased to about 200 kg/m³. A small quantity of water (about 3 % by weight) was added to the carbon black, whereafter the carbon black was further densified to a bulk density of about 600 kg/m³ by severely agitating the carbon black by means of the rotatable member 102.

It is an advantage of the invention, as illustrated, that it provides a cost effective method for densifying a bulk particulate material, such as silica fume. It is a further advantage of the invention, as illustrated, that the method is capable of densifying materials such as silica fume to a higher bulk density than conventional methods used for the densifying of silica fume and like materials. Particle agglomerisation is also much less compared to the prior art pneumatic densification processes of which the Applicant is aware, thus providing smaller average particle sizes, and increased BET surface areas.

## Claims

1. A method of densifying a bulk particulate material to provide a densified flowable bulk particulate material, the method including
mechanically agitating the bulk particulate material in the presence of an aqueous liquid densification agent; and
allowing the concentration of the aqueous liquid densification agent to reduce during the mechanical agitation of the bulk particulate material by allowing the bulk particulate material to heat up as a result of the mechanical agitation and vaporizing at least a portion of the aqueous liquid densification agent, thereby to provide a flowable bulk particulate material of increased bulk density.

2. The method as claimed in claim 1, in which the bulk particulate material, prior to densifying thereof, includes water as the densification agent in a mass concentration falling in a range with a lower limit of 0.4 % and an upper limit of 20 %.

3. The method as claimed in claim 2, in which the water is present in a range with a lower limit of 0.45 % and an upper limit of 15 %.

4. The method as claimed in any one of the preceding claims, in which the bulk particulate material is microsilica.

5. The method as claimed in any one of claims 1 to 3 inclusive, in which the bulk particulate material is selected from the group consisting of carbon black, fly ash, kaolin, and meta kaolin.

6. The method as claimed in any one of claims 1 to 3 inclusive, in which the bulk particulate material is selected from the group consisting of Mn₂O₃, Mn₃O₄, V₂O₅ and slag.

7. The method as claimed in claim 4, in which the microsilica has a particle size of less than 0.5 µm.

8. The method as claimed in any one of the preceding claims, which includes adding the densification agent to the bulk particulate material, prior to or during mechanical agitation of the bulk particulate material.

9. The method as claimed in any one of the preceding claims, in which mechanically agitating the bulk particulate material in the presence of the densification agent includes, at least partially confining the bulk particulate material and rotating a rotatable member submerged under the bulk particulate material about an axis of rotation to cause severe agitation of the material.

10. The method as claimed in any one of the preceding claims, in which mechanically agitating the bulk particulate material in the presence of the densification agent includes severely agitating the bulk particulate material with a rotatable member submerged in the bulk particulate material in a vessel and rotating about an axis of rotation which is upwardly extending, and inhibiting displacement of material downwardly past the rotating member during rotation of the rotatable member whilst allowing free movement of materials in the vessel above the rotating member.

11. The method as claimed in claim 9 or claim 10, in which the bulk particulate material is confined in a vessel having a closed bottom, the rotatable member being located immediately above the bottom of the vessel.

12. The method as claimed in any one of the preceding claims, in which a ratio of the bulk density of the particulate material prior to densifying thereof, to the bulk density of the flowable densified particulate material is at least 2 : 3.

13. The method as claimed in claim 12, in which the ratio of the bulk density of the particulate material prior to densifying thereof, to the bulk density of the flowable densified particulate material is at least 1 : 5.

14. The method as claimed in any one of the preceding claims, in which the bulk particulate material includes water in, or water is being added to the bulk particulate material to, a concentration of more than 4 % by mass, with the densified bulk particulate material including less than 3 % water by mass.

15. The method as claimed in claim 14, in which the bulk particulate material includes water in, or water is being added to the bulk particulate material to, a concentration of between 4 % and 8 % by mass, with the densified bulk particulate material including less than 1.5 % water by mass.

## Patentansprüche

1. Verfahren zum Verdichten von Schüttgut, um ein verdichtetes, fließfähiges Schüttgut herzustellen, umfassend:
maschinelles Rühren des Schüttgutes in Anwesenheit eines wässrigen flüssigen Verdichtungsmittels und
Absenken der Konzentration des wässrigen flüssigen Verdichtungsmittels während des maschinellen Rührens des Schüttgutes aufgrund einer Erhitzung des Schüttgutes durch das maschinelle Rühren und aufgrund eines Verdampfens mindestens eines Teils des wässrigen flüssigen Verdichtungsmittels, wodurch ein fließfähiges Schüttgut mit erhöhter Dichte erhalten wird.

2. Verfahren nach Anspruch 1, bei welchem das Schüttgut vor dessen Verdichtung als Verdichtungsmittel Wasser in einer Massen-Konzentration innerhalb eines Bereichs mit einer Untergrenze von 0,4% und einer Obergrenze von 20% enthält.

3. Verfahren nach Anspruch 2, bei welchem das Wasser in einem Bereich mit einer unteren Grenze von 0,45% und einer oberen Grenze von 15% präsent ist.

4. Verfahren nach einem der vorhergehenden Ansprüche, bei welchem das Schüttgut Mikrosilica (Quarzmehl) ist.

5. Verfahren nach einem der Ansprüche 1 bis 3, bei welchem das Schüttgut Kohlestaub (Ruß), Flugasche, Kaolin oder Meta-Kaolin ist.

6. Verfahren nach einem der Ansprüche 1 bis 3, bei welchem das Schüttgut Mn₂O₃, Mn₃O₄, V₂O₅ oder Schlacke ist.

7. Verfahren nach Anspruch 4, bei welchem das Mikrosilica eine Korngröße von unter 0,5 µm aufweist.

8. Verfahren nach einem der vorhergehenden Ansprüche, umfassend ein vor dem oder während des maschinellen Rührens des Schüttguts erfolgendes Zugeben des Verdichtungsmittels zum Schüttgut.

9. Verfahren nach einem der vorhergehenden Ansprüche, bei welchem das maschinelle Rühren des Schüttguts unter Anwesenheit des Verdichtungsmittels ein zumindest teilweises Einschließen des Schüttguts und ein Rotieren eines Rotorelements umfasst, welches in das Schüttgut eingetaucht wird und um eine Rotationsachse drehbar ist, um eine heftige Umwälzung des Materials zu erzeugen.

10. Verfahren nach einem der vorhergehenden Ansprüche, bei welchem das maschinelle Rühren des Schüttguts in Anwesenheit des Verdichtungsmittels ein heftiges Umwälzen des Schüttguts mittels eines Rotorelements umfasst, das in einem Gefäß in das Schüttgut eingetaucht ist und um eine aufrechte Rotationsachse rotiert, sowie ein Verhindern eines Absetzens von Material unter das Rotorelement beim Rotieren des Rotorelements, während das Material im Gefäß oberhalb des Rotorelements frei beweglich ist.

11. Verfahren nach Anspruch 9 oder Anspruch 10, bei welchem das Schüttgut in einem Gefäß mit einem geschlossenen Boden eingeschlossen ist, wobei das Rotorelement unmittelbar oberhalb des Gefäßbodens angeordnet ist.

12. Verfahren nach einem der vorhergehenden Ansprüche, bei welchem die Dichte des Schüttguts vor dessen Verdichtung zur Dichte des fließfähigen verdichteten Schüttguts im Verhältnis von mindestens 2:3 steht.

13. Verfahren nach Anspruch 12, bei welchem die Dichte des Schüttguts vor dessen Verdichtung zur Dichte des fließfähigen verdichteten Schüttguts im Verhältnis von mindestens 1:5 steht.

14. Verfahren nach einem der vorhergehenden Ansprüche, bei welchem das Schüttgut Wasser in einer Konzentration von mehr als 4 Massen-% aufweist bzw. Wasser in einer solchen Konzentration zum Schüttgut hinzu gegeben wird, während das verdichtete Schüttgut weniger als 3 Massen-% Wasser enthält.

15. Verfahren nach Anspruch 14, bei welchem das Schüttgut Wasser in einer Konzentration zwischen 4 Massen-% und 8 Massen-% enthält bzw. Wasser in dieser Konzentration dem Schüttgut zugegeben wird, während das verdichtete Schüttgut weniger als 1,5 Massen-% Wasser enthält.

## Revendications

1. Procédé de densification d'un matériau particulaire en vrac pour l'obtention d'un matériau particulaire en vrac densifié liquide, le procédé comprenant les étapes consistant à :
- agiter mécaniquement le matériau particulaire en vrac en présence d'un agent de densification liquide aqueux ; et
- permettre une réduction de la concentration de l'agent de densification liquide aqueux au cours de l'agitation mécanique du matériau particulaire en vrac en laissant le matériau particulaire en vrac se réchauffer sous l'effet de l'agitation mécanique et en évaporant au moins une partie de l'agent de densification liquide aqueux pour ainsi obtenir un matériau particulaire en vrac liquide de densité apparente plus élevée.

2. Procédé selon la revendication 1, dans lequel le matériau particulaire en vrac, avant sa densification, contient de l'eau en tant qu'agent de densification, avec une concentration en masse comprise dans une plage dont la limite inférieure est de 0,4 % et la limite supérieure est de 20%.

3. Procédé selon la revendication 2, dans lequel l'eau est présente dans une plage dont la limite inférieure est de 0,45% et la limite supérieure de 15%.

4. Procédé selon l'une quelconque des revendications précédentes, dans lequel le matériau particulaire en vrac est de la microsilice.

5. Procédé selon l'une quelconque des revendications 1 à 3, dans lequel le matériau particulaire en vrac est sélectionné parmi le noir de carbone, les cendres volantes, le kaolin et le méta-kaolin.

6. Procédé selon l'une quelconque des revendications 1 à 3, dans lequel le matériau particulaire en vrac est sélectionné parmi le Mn₂O₃, le Mn₃O₄, le V₂ O₅ et le laitier.

7. Procédé selon la revendication 4, dans lequel la microsilice a une taille de particules inférieure à 0,5µm.

8. Procédé selon l'une quelconque des revendications précédentes, qui consiste à ajouter l'agent de densification au matériau particulaire en vrac avant ou pendant l'agitation mécanique du matériau particulaire en vrac.

9. Procédé selon l'une quelconque des revendications précédentes, dans lequel l'agitation mécanique du matériau particulaire en vrac en présence de l'agent de densification consiste à confiner, au moins partiellement, le matériau particulaire en vrac et à faire tourner un élément rotatif immergé en dessous du matériau particulaire en vrac autour d'un axe de rotation pour provoquer une agitation intense du matériau.

10. Procédé selon l'une quelconque des revendications précédentes, dans lequel l'agitation mécanique du matériau particulaire en vrac en présence de l'agent de densification consiste à agiter le matériau particulaire en vrac de manière intense au moyen d'un élément rotatif immergé dans le matériau particulaire en vrac à l'intérieur d'une cuve et à opérer une rotation autour d'un axe de rotation qui s'étend vers le haut, et à empêcher le déplacement du matériau vers le bas au-delà de l'élément rotatif pendant la rotation de l'élément rotatif tout en autorisant le libre mouvement des matériaux dans la cuve au-dessus de l'élément rotatif.

11. Procédé selon la revendication 9 ou 10, dans lequel le matériau particulaire en vrac est confiné dans une cuve dont le fond est fermé, l'élément rotatif étant situé directement au-dessus du fond de la cuve.

12. Procédé selon l'une quelconque des revendications précédentes, dans lequel un rapport entre la densité apparente du matériau particulaire avant sa densification et la densité apparente du matériau particulaire densifié liquide est au moins de 2 : 3.

13. Procédé selon la revendication 12, dans lequel le rapport entre la densité apparente du matériau particulaire avant sa densification et la densité apparente du matériau particulaire densifié liquide est au moins de 1 : 5.

14. Procédé selon l'une quelconque des revendications précédentes, dans lequel le matériau particulaire en vrac contient de l'eau avec une concentration, ou de l'eau est ajoutée au matériau particulaire en vrac jusqu'à une concentration de plus de 4% en masse, le matériau particulaire en vrac densifié contenant moins de 3% d'eau en masse.

15. Procédé selon la revendication 14, dans lequel le matériau particulaire en vrac contient de l'eau avec une concentration, ou de l'eau est ajoutée au matériau particulaire en vrac jusqu'à une concentration, comprise entre 4% et 8% en masse, le matériau particulaire en vrac densifié contenant moins de 1,5% d'eau en masse.
